# EUROPÄISCHE PATENTSCHRIFT

(11) **EP 3 900 265 B1**
(45) Veröffentlichungstag und Bekanntmachung des Hinweises auf die Patenterteilung: **23.08.2023**
(21) Anmeldenummer: 19813801.8
(22) Anmeldetag: 02.12.2019
(51) Int. Cl.: H04L 67/12, H04L 69/40

(54) **VERFAHREN ZUM BETREIBEN EINES FAHRZEUGES BEIM AUSLAGERN VON RECHENLEISTUNG AUS DEM FAHRZEUG AN MINDESTENS EINEN EDGE-CLOUD-COMPUTER**
METHOD FOR OPERATING A VEHICLE WHEN TRANSFERRING PROCESSING POWER FROM THE VEHICLE TO AT LEAST ONE EDGE CLOUD COMPUTER
PROCÉDÉ POUR FAIRE FONCTIONNER UN VÉHICULE LORS DU TRANSFERT D'UNE PUISSANCE DE CALCUL DUDIT VÉHICULE À AU MOINS UN ORDINATEUR EN NUAGE DE BORD

(30) Priorität: 20.12.2018 DE 102018009909
(43) Veröffentlichungstag der Anmeldung: 27.10.2021
(73) Patentinhaber: Volkswagen Aktiengesellschaft, 38440 Wolfsburg (DE)
(72) Erfinder: STRYGULEC, Sarah, 42105 Wuppertal (DE); NOWAK, Bianca, 44577 Castrop-Rauxel (DE)
(86) Internationale Anmeldenummer: PCT/EP2019/083290
(87) Internationale Veröffentlichungsnummer: WO 2020/126438

(56) Entgegenhaltungen:
- DE-A1-102015 221 811
- MENEGUETTE RODOLFO I ET AL: "Peer-to-Peer Protocol for Allocated Resources in Vehicular Cloud Based on V2V Communication", 2017 IEEE WIRELESS COMMUNICATIONS AND NETWORKING CONFERENCE (WCNC), IEEE, 19. März 2017 (2017-03-19), Seiten 1-6, XP033095647, DOI: 10.1109/WCNC.2017.7925602 [gefunden am 2017-05-10]
- LEE EUISIN ET AL: "Vehicular cloud networking: architecture and design principles", IEEE COMMUNICATIONS MAGAZINE, IEEE SERVICE CENTER, PISCATAWAY, US, Bd. 52, Nr. 2, 1. Februar 2014 (2014-02-01), Seiten 148-155, XP011539685, ISSN: 0163-6804, DOI: 10.1109/MCOM.2014.6736756 [gefunden am 2014-02-10]

## Beschreibung

Die Erfindung betrifft ein Verfahren zum Betreiben eines Fahrzeuges beim Auslagern von Rechenleistung aus dem Fahrzeug an mindestens einen Edge-Cloud-Computer nach dem unabhängigen Verfahrensanspruch, um bei Verbindungsunterbrechungen zu dem mindestens einen Edge-Cloud-Computer unerwartete Abbrüche von ausführbaren Anwendungen zu vermeiden, ein entsprechendes Steuergerät für ein Fahrzeug nach dem unabhängigen Vorrichtungsanspruch und ein Fahrzeug nach dem nebengeordneten unabhängigen Vorrichtungsanspruch.

Die Schriftwerke, die sich mit mobilen Cloud-Netzwerken beschäftigen, sind z. B. MENEGUETTE ROOOLFO I ET AL: "Peer-to-Peer Protocol tor Allocated Resources in Vehicular Cloud Based on V2V Communication", 2017 IEEE WIRELESS COMMUNICATIONS ANO NETWORKING CONFERENCE (WCNC), IEEE, 19. März 2017 (2017-03-19), Seiten 1-6; LEE EUISIN ET AL: "Vehicular cloud networking: architecture and design principles", IEEE COMMUNICATIONS MAGAZINE, IEEE SERVICE CENTER, PISCATAWAY, US, Bd. 52, Nr. 2, 1. Februar 2014 (2014-02-01), Seiten 148-155 und DE 10 2015 221 811 A1.

Für eine sichere und qualitativ hochwertige Bereitstellung von Services und Features in Fahrzeugen wird zukünftig immer mehr neben der eigenen im Fahrzeug selbst befindlichen Hardware, wie Sensorik und Rechenressourcen der Steuergeräte, auf externe Hardware, wie z. B. auf Sensorik anderer Fahrzeuge und auf in der Umgebung des Fahrzeugs verfügbare, externe Speicher- und Rechenressourcen zurückgegriffen, die über Edge-Cloud-Computer oder sog. Edge-Nodes zur Verfügung gestellt wird. Dies ist insbesondere im Bereich des automatischen Fahrens relevant. Hierbei besteht jedoch die Gefahr, dass die Verbindung zu einem Edge-Cloud-Computer unvorhergesehen abbricht und das Fahrzeug plötzlich nur noch die eigene Hardware zur Verfügung hat.

Die Aufgabe der Erfindung ist es daher, ein verbessertes Verfahren zum Betreiben eines Fahrzeuges beim Auslagern von Rechenleistung aus dem Fahrzeug an mindestens einen Edge-Cloud-Computer bereitzustellen, um bei Verbindungsunterbrechungen zu dem mindestens einen Edge-Cloud-Computer unerwartete Abbrüche von ausführbaren Anwendungen zu vermeiden. Insbesondere ist es Aufgabe der Erfindung, ein Verfahren zum Betreiben eines Fahrzeuges beim Auslagern von Rechenleistung aus dem Fahrzeug an mindestens einen Edge-Cloud-Computer zur Verfügung zu stellen, welches trotz Unterbrechungen zum Edge-Cloud-Computer einen sicheren Betrieb des Fahrzeuges ermöglicht, welches die wesentlichen, insbesondere sicherheitsrelevanten und/oder funktionsrelevanten, Anwendungen im Fahrzeug unterstützt und welches ein sicheres Notfall-Szenario vorsieht, wenn die Weiterfahrt des Fahrzeuges nicht mehr möglich ist. Ferner ist es Aufgabe der Erfindung, ein entsprechendes Steuergerät für ein Fahrzeug sowie ein entsprechendes Fahrzeug bereitzustellen.

Die erfindungsgemäße Aufgabe wird gelöst durch ein verbessertes Verfahren zum Betreiben eines Fahrzeuges beim Auslagern von Rechenleistung aus dem Fahrzeug an mindestens einen Edge-Cloud-Computer, um bei Verbindungsunterbrechungen zu dem mindestens einen Edge-Cloud-Computer unerwartete Abbrüche von ausführbaren Anwendungen zu vermeiden, mit den Merkmalen des unabhängigen Verfahrensanspruches, durch ein verbessertes Steuergerät für ein Fahrzeug mit den Merkmalen des unabhängigen Vorrichtungsanspruches und durch ein verbessertes Fahrzeug mit den Merkmalen des nebengeordneten unabhängigen Vorrichtungsanspruches. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt ein Verfahren zum Betreiben eines Fahrzeuges, insbesondere eines autonom oder hochautomatisiert fahrenden Fahrzeuges, beim Auslagern von Rechenleistung aus dem Fahrzeug an mindestens einen Edge-Cloud-Computer (oder ggf. einen Cloud-Computer) bereit, um bei Verbindungsunterbrechungen zu dem mindestens einen Edge-Cloud-Computer (oder ggf. einen Cloud-Computer) unerwartete Abbrüche von ausführbaren Anwendungen zu vermeiden, umfassend folgende Schritte:
1) Erfassen mindestens eines Fremdfahrzeuges auf dem Straßennetzwerk,
2) Aussenden einer Anfrage an das mindestens eine Fremdfahrzeug, ob das Fremdfahrzeug eine Rechenleistung bereitstellen kann, die als externe Rechenleistung für mindestens eine Anwendungen des Fahrzeuges genutzt werden kann,
3) Zuordnen der mindestens einen Anwendung des Fahrzeuges zu der externen

Rechenleistung in Abhängigkeit einer Antwort des Fremdfahrzeuges auf die Anfrage, wobei die mindestens eine Anwendung des Fahrzeuges mehrere Anwendungen umfasst, und die mehreren Anwendungen jeweils eine Priorisierung erhalten und in der Reihenfolge deren Priorisierung mithilfe einer internen Rechenleistung des Fahrzeuges und/oder der externen Rechenleistung des mindestens einen Fremdfahrzeuges ausgeführt werden.

Unter einem Edge-Cloud-Computer im Sinne der Erfindung kann ein Rechenknoten eines Edge-Node-Netzwerkes verstanden werden, der über einen Prozessor mit einer Rechenleistung und eine Kommunikationseinheit zum Austauschen von Daten, bspw. mit einem anderen Edge-Cloud-Computer und/oder einem Endgerät, verfügt. Der Edge-Cloud-Computer kann zum Bereitstellen von Rechenleistung am Rande des Edge-Node-Netzwerkes dienen. Über die Kommunikationseinheit kann der Edge-Cloud-Computer Daten von einem Endgerät, wie z. B. einem Fahrzeug, empfangen, die er mit der eigenen Rechenleistung auf seinem Prozessor bearbeiten kann. Die Ergebnisse der Bearbeitung kann der Edge-Cloud-Computer über die Kommunikationseinheit zurück an das Fahrzeug senden. Bei den Daten kann es sich bspw. um Sensordaten handeln, die auf dem Edge-Cloud-Computer ausgewertet werden können. Auch ist es denkbar, dass der Edge-Cloud-Computer unterschiedliche Rechenaufgaben für unterschiedliche Systemanwendungen im Fahrzeug übernehmen kann.

Der Erfindungsgedanke liegt dabei darin, dass ein Fahrzeug, welches selbst nicht über hinreichende Rechenressourcen verfügt, um bei Verbindungsunterbrechungen zu dem mindestens einen Edge-Cloud-Computer (oder ggf. einen Cloud-Computer) die erforderlichen und/oder gewünschten Anwendungen selbst zu übernehmen, in den Fremdfahrzeugen seiner Umgebung anfragen kann, ob die Fremdfahrzeuge ihm Rechenressourcen zur Verfügung stellen können. Wenn die Anfrage von einem Fremdfahrzeug positiv beantwortet wird, können die erforderlichen Berechnungen auf einem Steuergerät des Fremdfahrzeuges ausgeführt werden. In diesem Falle agiert das helfende Fremdfahrzeug als eine Art temporärer Edge-Cloud-Computer bzw. sog. Mobile-Edge-Node. Solange die Fahrzeuge hinreichend nah beieinanderbleiben, ist eine Kommunikation und Datenübertragung zwischen den Fahrzeugen möglich. Insbesondere wenn beide Fahrzeuge in dieselbe Richtung mit einer ähnlichen Geschwindigkeit fahren, kann das helfende Fremdfahrzeug das um Hilfe anfragende Fahrzeug über einen längeren Zeitraum unterstützen. Erbrachte Hilfe kann vorteilhafterweise bewertet und entsprechend vergütet werden.

Vorteilhafterweise kann die Hilfe des Fremdfahrzeuges für sicherheitsrelevante Anwendungen eine hohe Priorisierung aufweisen. Die Anwendungen, die für eine Weiterfahrt des Fahrzeuges relevant sein können, können ebenfalls eine wichtige Priorisierung erhalten. Die Anwendungen, die lediglich einer Unterhaltung und/oder Beschäftigung bzw. dem Wohlbefinden und/oder Komfort eines Benutzers dienen, können wiederum eine niedrige Priorisierung erhalten. Die Priorisierung kann dabei dem Fremdfahrzeug übermittelt werden und bei der Antwort des Fremdfahrzeuges berücksichtigt werden. Denkbar ist dabei, dass das Fremdfahrzeug auf weniger relevante Services, wie bspw. Streaming von Musik zeitweise verzichten kann, um stattdessen essentielle Services, wie z. B. Notbremsassistent oder dergleichen, für das anfragende Fahrzeug zur Verfügung zu stellen. Außerdem ist es denkbar, dass die Sensordaten des Fremdfahrzeuges genutzt werden können, um Anwendungen auf dem anfragenden Fahrzeug sicherstellen zu können. Wenn bspw. das Fremdfahrzeug die Straßenschilder bereits ausgewertet hat, kann es diese Informationen mit dem anfragenden Fahrzeug teilen. Denkbar ist zudem, dass je nach gewünschter Anwendung, das Fremdfahrzeug eine alternative und/oder äquivalente Anwendung dem anfragenden Fahrzeug anbieten kann.

Somit kann ein verbessertes Verfahren bereitgestellt werden, welches bei Verbindungsunterbrechungen zu dem mindestens einen Edge-Cloud-Computer unerwartete Abbrüche von ausführbaren Anwendungen im Fahrzeug vermeiden oder zumindest reduzieren kann.

Ferner kann die Erfindung bei einem Verfahren zum Betreiben eines Fahrzeuges vorsehen, dass, wenn im Schritt 1) mehrere Fremdfahrzeuge auf dem Straßennetzwerk erfasst werden, zunächst die Fremdfahrzeuge angefragt werden, die in einem (geografischen) Einzugsbereich des Fahrzeuges liegen und/oder entlang einer Route des Fahrzeuges voraussichtlich liegen werden. Der Einzugsbereich des Fahrzeuges kann durch die Reichweite der Datenkommunikation bestimmt werden, die durch die Kommunikationseinheiten des Fahrzeuges aufgebaut werden kann. Auf diese Weise kann der Kreis von in Frage kommenden Fremdfahrzeugen auf eine vorteilhafte Weise reduziert werden, mit denen Datenkommunikation und/oder Datenübertragung während einer planbaren Zeit entlang der Route des Fahrzeuges durchgeführt werden kann.

Weiterhin kann die Erfindung bei einem Verfahren zum Betreiben eines Fahrzeuges vorsehen, dass das mindestens eine Fremdfahrzeug anhand mindestens einer der folgenden Informationen beurteilt wird:
- Lage,
- Auslastung,
- Einzugsbereich,
- Rechenleistung,
- zeitliche Verfügbarkeit,
- verfügbare Rechenkapazität,
- Zuverlässigkeit,
- Wartezeit,
- voraussichtliche Route,
- voraussichtliche Geschwindigkeit.

Diese Informationen können bei dem Fremdfahrzeug angefragt werden. Auf diese Weise kann ein Fremdfahrzeug ausgesucht werden, welches zum Ausführen einer gewünschten Anwendung auf eine vorteilhafte Weise geeignet ist.

Des Weiteren kann die Erfindung bei einem Verfahren zum Betreiben eines Fahrzeuges vorsehen, dass für die externe Rechenleistung, die vom Fremdfahrzeug bereitgestellt wird, eine Charakterisierung an das Fremdfahrzeug von dem Fahrzeug und/oder einem Mobilfunkanbieter und/oder einem Netzwerkbetreiber erteilt wird. Die Charakterisierung kann vorteilhafterweise eine positive Bewertung und/oder eine Punktezahl und/oder eine Belohnung enthalten. Die Charakterisierung kann den Benutzer des Fremdfahrzeuges motivieren, dem anfragenden Fahrzeug zu helfen.

Außerdem kann die Erfindung bei einem Verfahren zum Betreiben eines Fahrzeuges vorsehen, dass die mindestens eine Anwendung des Fahrzeuges mindestens eine der folgenden Anwendungen umfasst:

| | |
|---|---|
| APP1 | Fahrassistenzfunktionen, |
| APP2 | Fahrmodi gemäß einem von möglichen Automatisierungsgraden beim Betreiben des Fahrzeuges, |
| APP3 | Auswertung von Sensordaten, |
| APP4 | Fusion von Sensordaten, |
| APP5 | Berechnung von Fahrmanövern, |
| APP6 | hochautomatisiertes und/oder autonomes Fahren, |
| APP7 | Navigation, |
| APP8 | Informationsdienste, |
| APP9 | Entertainment, |
| APP10 | Streaming, |
| APP11 | Updates, |
| APP12 | On-Board-Diagnostik, |
| APP13 | Telematik, |
| APP14 | Voice-Control, |
| APP15 | Gestenerkennung, |
| APP16 | Klimatisierung, |
| APP17 | Positionserkennung. |

Somit können relevante Anwendungen innerhalb des Fahrzeuges im Rahmen der Erfindung berücksichtigt werden.

Zudem ist es im Rahmen der Erfindung denkbar, dass die Fahrassistenzfunktionen mindestens eine der folgenden Anwendungen umfassen können:

| | |
|---|---|
| APP1.1 | Antiblockiersystem, |
| APP1.2 | Elektronisches Stabilitätsprogramm, |
| APP1.3 | Abstandsregeltempomat, |
| APP1.4 | Notbremsassistent, |
| APP1.5 | Spurhalteassistent, |
| APP1.6 | Spurwechselassistent, |
| APP1.7 | Nachtsichtassistent. |

Mithin können relevante Fahrassistenzfunktionen innerhalb des Fahrzeuges im Rahmen der Erfindung berücksichtigt werden.

Die Erfindung sieht bei einem Verfahren zum Betreiben eines Fahrzeuges vor, dass die mindestens eine Anwendung des Fahrzeuges mehrere Anwendungen umfasst, und dass die mehreren Anwendungen jeweils eine Priorisierung erhalten und in der Reihenfolge deren Priorisierung mithilfe einer internen Rechenleistung des Fahrzeuges und/oder der externen Rechenleistung des mindesten einen Fremdfahrzeuges ausgeführt werden. Sicherheitsrelevante Anwendungen können dabei eine hohe Priorisierung erhalten. Die Anwendungen, die für eine Weiterfahrt des Fahrzeuges relevant sein können, können eine mittlere Priorisierung erhalten. Die Anwendungen, die lediglich dem Wohlbefinden und/oder Komfort eines Benutzers dienen, können wiederum eine niedrige Priorisierung erhalten und gar für den Weiterbetrieb des Fahrzeuges vernachlässigt werden. Auf Basis der Priorisierung können die eigenen Rechenressourcen und/oder die zugesagten Rechenressourcen der Fremdfahrzeuge für die Überbrückungszeit, in der die Verbindung zu den externen Ressourcen, wie z. B. Edge-Cloud-Computern und/oder Cloud-Computern, unterbrochen ist, entsprechend zugeteilt werden. Mithilfe der Priorisierung kann somit die Sicherheit beim Betreiben des Fahrzeuges erhöht werden.

Ferner kann die Erfindung bei einem Verfahren zum Betreiben eines Fahrzeuges vorsehen, dass die Anwendungen eine Priorisierung in der Reihenfolge von APP1 bis APP16 und/oder die Fahrassistenzfunktionen eine Priorisierung in der Reihenfolge von APP1.1 bis APP1.7 erhalten. Auf diese Weise kann die Priorisierung leicht, automatisiert und mit wenig Aufwand durchgeführt werden.

Weiterhin kann die Erfindung bei einem Verfahren zum Betreiben eines Fahrzeuges vorsehen, dass die Verfahrensschritte 1) bis 3) prädiktiv und/oder zyklisch während des Normalbetriebs des Fahrzeuges ausgeführt werden, bei dem ein Auslagern von Rechenleistung aus dem Fahrzeug an mindestens einen Edge-Cloud-Computer möglich ist. Somit kann das erfindungsgemäße Verfahren vorausschauend durchgeführt werden, um auf eventuelle Verbindungsunterbrechungen im Voraus vorbereitet zu sein.

Des Weiteren kann die Erfindung bei einem Verfahren zum Betreiben eines Fahrzeuges vorsehen, dass die Verfahrensschritte 1) bis 3) im Falle einer Verbindungsunterbrechung zu dem mindestens einen Edge-Cloud-Computer ausgeführt werden. Somit können Energiekosten während des Normalbetriebs gespart werden und das Verfahren erst nach Bedarf durchgeführt werden.

Außerdem kann die Erfindung bei einem Verfahren zum Betreiben eines Fahrzeuges vorsehen, dass im Falle einer Verbindungsunterbrechung zu dem mindestens einen Edge-Cloud-Computer einem Benutzer des Fahrzeuges angeboten wird, die mindestens eine Anwendung des Fahrzeuges, die bei der Verbindungsunterbrechung wegfällt und die durch den Benutzer manuell ausgeführt werden kann, zu übernehmen. Dies kann geschehen, bevor ein Fremdfahrzeug angefragt wird oder wenn kein Fremdfahrzeig in der Nähe ist oder wenn eine negative Antwort empfangen wurde. Auf diese Weise kann der Benutzer, bspw. bei der Lenkung des Fahrzeuges, eingebunden werden, um eine möglichst weite Palette an ausführbaren Anwendungen trotz Verbindungsunterbrechungen sicherstellen zu können.

Zudem kann die Erfindung bei einem Verfahren zum Betreiben eines Fahrzeuges vorsehen, dass im Falle einer Verbindungsunterbrechung ein Notfall-Szenario ausgeführt wird, wenn eine Weiterfahrt mit dem Fahrzeug nicht möglich ist, und/oder dass das Notfall-Szenario mindestens eine der folgenden Maßnahmen umfasst:
- Reduzieren einer Geschwindigkeit des Fahrzeuges,
- Ausscheren,
- Halten,
- Signalisierung eines Notfalls.

Auf diese Weise kann die Unfallgefahr und somit die Gefährdung der Insassen reduziert werden, selbst wenn die Fahrtüchtigkeit des Fahrzeuges beeinträchtigt ist.

Ferner wird die erfindungsgemäße Aufgabe durch ein Steuergerät für ein Fahrzeug zum Ausgleichen von Verbindungsunterbrechungen beim Auslagern von Rechenleistung aus dem Fahrzeug an mindestens einen Edge-Cloud-Computer während des Betriebes des Fahrzeuges auf einem Straßennetzwerk gelöst, aufweisend: eine Detektionseinheit zum Erfassen mindestens eines Fremdfahrzeuges auf dem Straßennetzwerk, eine Kommunikationseinheit zum Aussenden einer Anfrage an das mindestens eine Fremdfahrzeug, ob das Fremdfahrzeug eine Rechenleistung bereitstellen kann, die als externe Rechenleistung für mindestens eine Anwendungen des Fahrzeuges genutzt werden kann, eine Recheneinheit zum Zuordnen der mindestens einen Anwendung des Fahrzeuges zu der externen Rechenleistung in Abhängigkeit einer Antwort des Fremdfahrzeuges auf die Anfrage. Mithilfe des erfindungsgemäßen Steuergeräts werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Außerdem kann das Steuergerät im Rahmen der Erfindung dazu ausgeführt sein, ein Verfahren auszuführen, welches wie oben beschrieben ablaufen kann.

Dankbar ist zudem, dass das Steuergerät in einer zentralen Steuereinheit des Fahrzeuges implementierbar oder als eine eigenständige Steuereinheit ausgebildet ist. Eine zentrale Steuereinheit kann in modernen Fahrzeug bereits von Hause aus implementiert sein. Mithilfe einer eigenständigen Steuereinheit können sogar vorhandene Fahrzeuge mit der erfindungsgemäßen Funktionalität nachgerüstet werden.

Zudem kann die Erfindung bei einem Steuergerät eine Speichereinheit vorsehen, in der eine dynamische Karte hinterlegt ist, die das Straßennetzwerk, das mindestens eine Fremdfahrzeug, den mindestens einen Edge-Cloud-Computer und/oder mindestens eine Information über das mindestens eine Fremdfahrzeug und den mindestens einen Edge-Cloud-Computer abbildet. Mithilfe einer solchen Speichereinheit kann ermöglicht werden, dass das Steuergerät über die Informationen verfügt, die bei der Wahl der passenden Fremdfahrzeuge zur Auslagerung von Rechenleistung entscheidend sein können. Mithilfe der Karte können außerdem Fremdfahrzeuge und Edge-Cloud-Computer abgebildet werden, die aktuell und/oder voraussichtlich in einem Einzugsbereich des Fahrzeuges und/oder entlang einer Route des Fahrzeuges liegen werden. Auf diese Weise kann die Auswahl von passenden Fremdfahrzeugen erleichtert werden, die die Rechenleistung während der Bewegung des Fahrzeuges zur Verfügung stellen können. Die Informationen können dabei Lage, Auslastung, Einzugsbereich, Rechenleistung, zeitliche Verfügbarkeit, verfügbare Rechenkapazität, Zuverlässigkeit und/oder Wartezeit bei der Beanspruchung von Rechenleistungen des Fremdfahrzeuges und/oder des mindestens einen Edge-Cloud-Computers umfassen. Zudem kann die Karte dynamische Informationen über das Fremdfahrzeug, wie Geschwindigkeit und voraussichtliche Route umfassen. Die Karte kann zudem dazu dienen, die Bereiche zu bestimmen, die eine schlechte Abdeckung durch die Edge-Nodes aufweisen, um diese Bereiche bei Bedarf zu umfahren.

Weiterhin kann die Erfindung bei einem Steuergerät vorsehen, dass die Recheneinheit dazu ausgeführt ist, die Karte prädiktiv und/oder zyklisch während des Normalbetriebs des Fahrzeuges zu aktualisieren, bei dem ein Auslagern von Rechenleistung aus dem Fahrzeug an mindestens einen Edge-Cloud-Computer möglich ist. Somit kann gewährleistet werden, dass möglichst aktuelle Informationen, die bei der Wahl der Route des Fahrzeuges und/oder bei der Wahl der passenden Fremdfahrzeuge zum Auslagern von Rechenleistung im Falle von Verbindungsunterbrechungen zum Edge-Cloud-Computer vorausschauend vorliegen.

Des Weiteren kann die Erfindung bei einem Steuergerät vorsehen, dass die Recheneinheit dazu ausgeführt ist, das Fahrzeug als einen mobilen Edge-Cloud-Computer anzumelden, um eine interne Rechenleistung an Fremdfahrzeuge zur Verfügung zu stellen. Auf diese Weise kann das Fahrzeug ein gleichwertiges Teil eines Edge-Cloud-Netzwerkes werden, um die eigene Rechenleistung den anderen Netzteilnehmern, vorzugsweise anderen Fahrzeugen, zur Verfügung stellen.

Vorteilhafterweise kann bei einem Steuergerät im Rahmen der Erfindung eine Anzeigeeinheit, bspw. in Form eines Displays, vorzugsweise eines Touchdisplays, vorgesehen sein, um mindestens einen Schritt eines Verfahrens, welches wie oben beschrieben ablaufen kann, zu visualisieren. Vorteilhafterweise kann die Anzeigeeinheit in einem Armaturenbrett oder einem Overheaddisplay des Fahrzeuges angeordnet sein. Ist ein Fahrzeug in der Umgebung in der Lage Rechenleistungen zu übernehmen, kann dies dem Nutzer über die Anzeigeeinheit mitgeteilt werden. Zudem ist es denkbar, dass der Benutzer über eine Eingabemöglichkeit entsprechende nicht sicherheitsrelevante Anwendungen zum Nutzen der externen Rechenressourcen auswählen kann, wenn die sicherheitsrelevante Anwendungen bereits abgedeckt sind.

Zudem kann die Erfindung bei einem Steuergerät vorsehen, dass die Kommunikationseinheit dazu ausgeführt ist, mindestens eine Information über das Fahrzeug an Fremdfahrzeuge mitzuteilen. Diese Informationen können Anwendungsinformationen umfassen, die erforderliche Rechenleistung, die erforderliche Rechenkapazität, die Geschwindigkeit sowie die Route des Fahrzeuges. Dies kann wiederum den Fremdfahrzeugen verhelfen, die Antwort zu erstellen.

Außerdem ist es bei einem Steuergerät im Sinne der Erfindung denkbar, dass die Kommunikationseinheit dazu ausgeführt ist, eine Verbindung zu dem mindestens einen Fremdfahrzeug über WLAN und/oder einen Mobilfunktstandard aufzubauen. Auf diese Weise kann eine flexible Kommunikation unter den Fahrzeugen ermöglicht werden.

Zudem wird die erfindungsgemäße Aufgabe durch ein Fahrzeug mit mindestens einem Steuergerät gelöst, welches wie oben beschrieben ausgeführt werden kann. Mithilfe des erfindungsgemäßen Fahrzeuges können die gleichen Vorteile erreicht werden, die oben im Zusammenhang mit dem erfindungsgemäßen Verfahren und/oder mit dem erfindungsgemäßen Steuergerät beschrieben wurden. Auf diese Vorteile wird vorliegend vollumfänglich Bezug genommen.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigt:
- Fig. 1: eine schematische Darstellung eines Fahrzeuges beim Ausführen eines erfindungsgemäßen Verfahrens,
- Fig. 2: eine schematische Darstellung eines Armaturenbretts und eines Steuergerätes eines Fahrzeuges im Sinne der Erfindung und
- Fig. 3: eine schematische Darstellung einer Anzeigeeinheit im Sinne der Erfindung.

In den verschiedenen Figuren werden die gleichen technischen Merkmale mit denselben Bezugszeichen bezeichnet, wobei in der Regel ein technisches Merkmal nur einmal beschrieben wird.

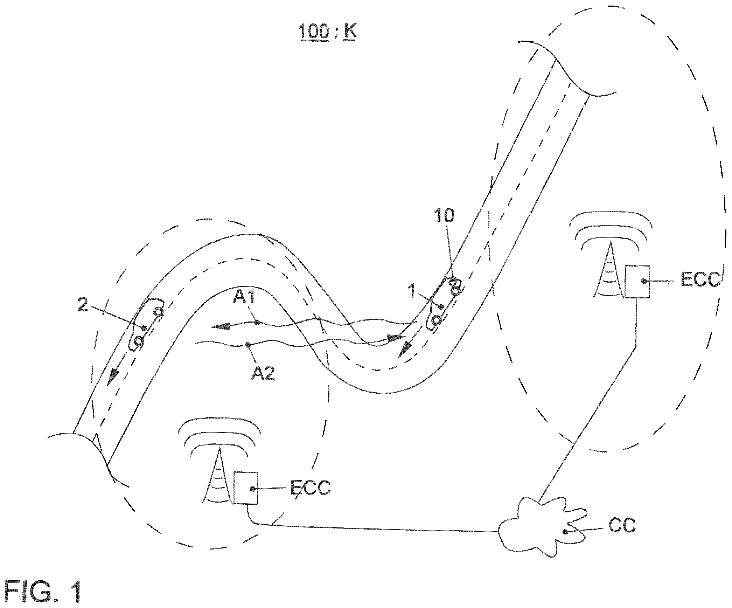

Die Figuren 1 bis 3 dienen zum Veranschaulichen des erfindungsgemäßen Verfahrens zum Betreiben eines Fahrzeuges 1, insbesondere eines autonom oder hochautomatisiert fahrenden Fahrzeuges 1, beim Auslagern von Rechenleistung aus dem Fahrzeug 1 an mindestens einen Edge-Cloud-Computer ECC und/oder mindestens einen Cloud-Computer CC, um bei Verbindungsunterbrechungen zu dem mindestens einen Edge-Cloud-Computer ECC und/oder einem Cloud-Computer CC unerwartete Abbrüche von ausführbaren Anwendungen zu vermeiden. Das Verfahren umfasst die folgenden Schritte:
1) Erfassen mindestens eines Fremdfahrzeuges 2 auf dem Straßennetzwerk 100,
2) Aussenden einer Anfrage A1 an das mindestens eine Fremdfahrzeug 2, ob das Fremdfahrzeug 2 eine Rechenleistung R2 bereitstellen kann, die als externe Rechenleistung R2 für mindestens eine Anwendungen APP des Fahrzeuges 1 genutzt werden kann,
3) Zuordnen der mindestens einen Anwendung APP des Fahrzeuges 1 zu der externen Rechenleistung R2 in Abhängigkeit einer Antwort A2 des Fremdfahrzeuges 2 auf die Anfrage A1.

In der Figur 1 sind zwei Fahrzeuge 1, 2 gezeigt, die sich entlang einer Route bewegen. Während der Fahrt kann es jedoch dazu kommen, dass das Fahrzeug 1 einen Einzugsbereich eines Edge-Cloud-Computers ECC von ggf. mehreren Edge-Cloud-Computern ECC und/oder Cloud-Computern CC verlässt. Bevor das Fahrzeug 1 in den Einzugsbereich eines anderen Edge-Cloud-Computers ECC gelangt, kann es zu Unterbrechungen in der Konnektivität zu den Edge-Cloud-Computern ECC und/oder Cloud-Computern CC kommen. Einige laufende Anwendungen APP auf dem Fahrzeug 1, die bisher mithilfe des mindestens eines Edge-Cloud-Computers ECC ausgeführt wurden, können dabei ungewollt ausfallen. In diesem Falle kann das Fahrzeug 1 gemäß dem erfindungsgemäßen Verfahren das Fremdfahrzeug 2 anfragen, ob das Fremdfahrzeug 2 eine Rechenleistung R2 bereitstellen kann, die als externe Rechenleistung R2 für mindestens eine Anwendungen APP des Fahrzeuges 1 genutzt werden kann. Die mindestens eine Anwendung APP des Fahrzeuges 1 kann eine oder mehrere erforderliche und/oder gewünschte Anwendungen APP des Fahrzeuges 1 umfassen.

Gemäß der Erfindung kann das Fahrzeug 1 bei den Fremdfahrzeugen 2 seiner Umgebung anfragen, ob die Fremdfahrzeuge 2 Rechenressourcen für mindestens eine Anwendung APP des Fahrzeuges 1 zur Verfügung stellen können. Wenn die Anfrage A1 von einem in Frage kommenden Fremdfahrzeug 2 positiv beantwortet wird, können die erforderlichen und/oder gewünschten Anwendungen APP auf einem Steuergerät des Fremdfahrzeuges 2 ausgeführt werden. Das helfende Fremdfahrzeug 2 dient dabei als eine Art temporärer Edge-Cloud-Computer ECC oder sog. Mobile-Edge-Node. Solange die Fahrzeuge 1, 2 hinreichend nah beieinanderbleiben, insbesondere wenn beide Fahrzeuge 1, 2 in dieselbe Richtung mit einer ähnlichen Geschwindigkeit V fahren, kann das helfende Fremdfahrzeug 2 das um Hilfe anfragende Fahrzeug 1 über einen längeren Zeitraum unterstützen. Das helfende Fremdfahrzeug 2 kann vorteilhafterweise entsprechend vom anfragenden Fahrzeug 1 und/oder einem Netzwerkbetreiber entlohnt werden.

Denkbar ist dabei, dass das Fremdfahrzeug 2 eine ungenutzte Rechenleistung 2 für das anfragende Fahrzeug 1 bereitstellen kann. Zudem ist es denkbar, dass das Fremdfahrzeug 2 bewusst, bspw. auf weniger relevante Services, wie bspw. Streaming von Musik zeitweise verzichten kann, um stattdessen essentielle Services, wie z. B. Notbremsassistent oder dergleichen, für das anfragende Fahrzeug 1 zur Verfügung zu stellen. Außerdem ist es denkbar, dass die Sensordaten des Fremdfahrzeuges 2 genutzt werden können, um bestimmte Anwendungen APP auf dem anfragenden Fahrzeug 1 sicherstellen zu können.

Wenn im Schritt 1) des erfindungsgemäßen Verfahrens mehrere Fremdfahrzeuge 2 auf dem Straßennetzwerk 100 erfasst werden, können zunächst die Fremdfahrzeuge 2 angefragt werden, die in einem (geografischen) Einzugsbereich des Fahrzeuges 1 liegen und/oder entlang einer Route des Fahrzeuges 1 voraussichtlich liegen werden.

Die Fremdfahrzeuge 2 können anhand folgender Informationen beurteilt werden, wie:
- Lage,
- Auslastung,
- Einzugsbereich,
- Rechenleistung,
- zeitliche Verfügbarkeit,
- verfügbare Rechenkapazität,
- Zuverlässigkeit,
- Wartezeit,
- voraussichtliche Route,
- voraussichtliche Geschwindigkeit V.

Mithilfe dieser Informationen kann ein Fremdfahrzeug 2 ausgesucht werden, welches auf einer vorteilhaften Weise für die erforderlichen und/oder gewünschten Anwendungen APP geeignet ist.

Die Anwendungen APP, für die das Fahrzeug 1 eine externe Rechenleistung R2 benötigen kann, können folgende Anwendungen APP umfassen:

| | |
|---|---|
| APP1 | Fahrassistenzfunktionen, |
| APP2 | Fahrmodi gemäß einem von möglichen Automatisierungsgraden beim Betreiben des Fahrzeuges, |
| APP3 | Auswertung von Sensordaten, |
| APP4 | Fusion von Sensordaten, |
| APP5 | Berechnung von Fahrmanövern, |
| APP6 | hochautomatisiertes und/oder autonomes Fahren, |
| APP7 | Navigation, |
| APP8 | Informationsdienste, |
| APP9 | Entertainment, |
| APP10 | Streaming, |
| APP11 | Updates, |
| APP12 | On-Board-Diagnostik, |
| APP13 | Telematik, |
| APP14 | Voice-Control, |
| APP15 | Gestenerkennung, |
| APP16 | Klimatisierung, |
| APP17 | Positionserkennung. |

Unter den Fahrassistenzfunktionen APP1 können außerdem folgende Anwendungen APP zählen:

| | |
|---|---|
| APP1.1 | Antiblockiersystem, |
| APP1.2 | Elektronisches Stabilitätsprogramm, |
| APP1.3 | Abstandsregeltempomat, |
| APP1.4 | Notbremsassistent, |
| APP1.5 | Spurhalteassistent, |
| APP1.6 | Spurwechselassistent, |
| APP1.7 | Nachtsichtassistent. |

Im Falle, wenn mehrere Anwendungen APP ausgelagert werden sollen, können die Anwendungen APP jeweils eine Priorisierung erhalten und in der Reihenfolge deren Priorisierung mithilfe der internen Rechenleistung R1 des Fahrzeuges 1 und ergänzend der externen Rechenleistung R2 des Fremdfahrzeuges 2 ausgeführt werden, das die Anfrage A1 bejaht hat. Sicherheitsrelevante Anwendungen APP können dabei eine hohe Priorisierung erhalten. Die Anwendungen APP, die für eine Weiterfahrt des Fahrzeuges 1 relevant sein können, können eine mittlere Priorisierung erhalten. Die Anwendungen APP, die lediglich dem Wohlbefinden und/oder Komfort eines Benutzers dienen, können wiederum eine niedrige Priorisierung erhalten und gar für den Weiterbetrieb des Fahrzeuges 1 vernachlässigt werden.

In den oben gezeigten Listen können die Anwendungen eine Priorisierung in der Reihenfolge von APP1 bis APP16 und/oder die Fahrassistenzfunktionen eine Priorisierung in der Reihenfolge von APP1.1 bis APP1.7 erhalten.

Die Verfahrensschritte 1) bis 3) können im Rahmen der Erfindung prädiktiv und/oder zyklisch bereits während des Normalbetriebs des Fahrzeuges 1 ausgeführt werden, bei dem ein Auslagern von Rechenleistung aus dem Fahrzeug 1 an mindestens einen Edge-Cloud-Computer ECC möglich ist. Auf diese Weise kann das Fahrzeug 1 auf eventuelle Verbindungsunterbrechungen zu dem mindestens einen Edge-Cloud-Computer ECC im Voraus vorbereitet werden.

Außerdem ist es denkbar, dass die Verfahrensschritte 1) bis 3) erst im Falle einer Verbindungsunterbrechung zu dem mindestens einen Edge-Cloud-Computer ECC ausgeführt werden, um Energiekosten während des Normalbetriebs des Fahrzeuges 1 zu reduzieren.

Grundsätzlich ist es im Rahmen der Erfindung denkbar, dass im Falle einer Verbindungsunterbrechung zu dem mindestens einen Edge-Cloud-Computer ECC, einem Benutzer des Fahrzeuges 1 angeboten wird, die mindestens eine Anwendung APP des Fahrzeuges 1, die bei der Verbindungsunterbrechung wegfällt und die durch den Benutzer manuell ausgeführt werden kann, selbst zu übernehmen. Dies kann vorteilhafterweise noch vor dem Ausführen der Schritte 1) bis 3) geschehen oder wenn kein Fremdfahrzeug 2 in der Nähe ist oder wenn das Fremdfahrzeug 2 keine Rechenleistung bereitstellen kann.

Für den Fall, wenn eine Weiterfahrt mit dem Fahrzeug 1 gar nicht mehr möglich ist, bspw. wenn weder die interne Rechenleistung R1 des Fahrzeuges 1 noch die externe Rechenleistung R2 eine Weiterfahrt des Fahrzeuges 1 garantieren kann, kann ein Notfall-Szenario vorgesehen sein, welches z. B. folgende Maßnahmen umfassen kann:
- Reduzieren einer Geschwindigkeit des Fahrzeuges,
- Ausscheren,
- Halten,
- Signalisierung eines Notfalls.

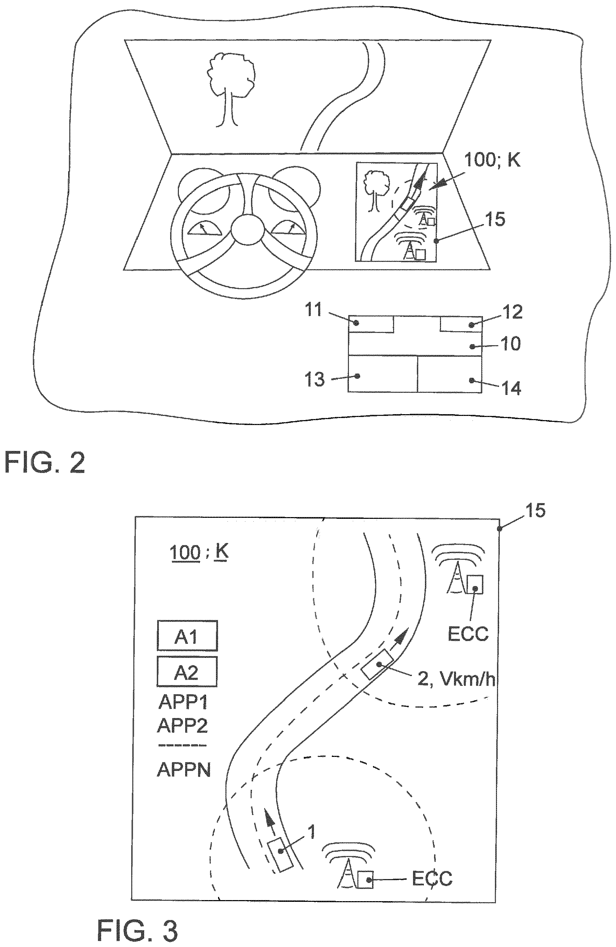

Die Figur 2 zeigt eine schematische Darstellung eines Steuergeräts 10 für ein Fahrzeug 1 gemäß einem weiteren Aspekt der Erfindung. Das Steuergerät 10 dient zum Ausgleichen von Verbindungsunterbrechungen beim Auslagern von Rechenleistung aus dem Fahrzeug 1 an mindestens einen Edge-Cloud-Computer ECC während des Betriebes des Fahrzeuges auf einem Straßennetzwerk 100. Das erfindungsgemäße Steuergerät 10 weist folgende Elemente auf: eine Detektionseinheit 11 zum Erfassen mindestens eines Fremdfahrzeuges 2 auf dem Straßennetzwerk 100, eine Kommunikationseinheit 12 zum Aussenden einer Anfrage A1 an das mindestens eine Fremdfahrzeug 2, ob das Fremdfahrzeug 2 eine Rechenleistung R2 bereitstellen kann, die als externe Rechenleistung R2 für mindestens eine Anwendungen APP des Fahrzeuges 1 genutzt werden kann und eine Recheneinheit 13 zum Zuordnen der mindestens einen Anwendung APP des Fahrzeuges 1 zu der externen Rechenleistung R2 in Abhängigkeit einer Antwort A2 des Fremdfahrzeuges 2 auf die Anfrage A1. Das erfindungsgemäße Steuergerät 10 dient vorteilhfterweise dazu, ein Verfahren auszuführen, welches wie oben beschrieben ablaufen kann.

Die Recheneinheit 13 kann zudem dazu ausgeführt sein, Informationen über das Fremdfahrzeug 2 und Anwendungsinformationen für die erforderlichen und/oder gewünschten Anwendungen APP des Fahrzeuges 1 zu verarbeiten und eine entsprechende Zuordnung von der externen Rechenleistung R2 zu der externen Rechenleistung R2 durchzuführen.

Dankbar ist dabei, dass das Steuergerät 10 in einer zentralen Steuereinheit des Fahrzeuges 1 implementierbar oder als eine eigenständige Steuereinheit ausgebildet sein kann.

Das Steuergerät 10 kann ferner eine Speichereinheit 14 aufweisen, in der eine dynamische Karte K hinterlegt sein kann, die das Straßennetzwerk 100, das mindestens eine Fremdfahrzeug 2, den mindestens einen Edge-Cloud-Computer ECC und/oder mindestens eine Information über das mindestens eine Fremdfahrzeug 2 und den mindestens einen Edge-Cloud-Computer ECC enthält. Die Karte K kann zudem dazu dienen, das Fahrzeug 1 zu navigieren. Insbesondere kann die Karte K dazu dienen, die Bereiche des Straßennetzwerkes 100 zu bestimmen, die eine schlechte Abdeckung durch die Edge-Nodes ECC aufweisen, um diese Bereiche bei Bedarf zu umfahren.

Die Recheneinheit 13 kann weiterhin dazu dienen, die Karte K prädiktiv und/oder zyklisch während des Normalbetriebs des Fahrzeuges 1 zu aktualisieren, bei dem ein Auslagern von Rechenleistung aus dem Fahrzeug 1 an mindestens einen Edge-Cloud-Computer ECC möglich ist.

Die Recheneinheit 13 kann des Weiteren dazu dienen, das Fahrzeug 1 als einen mobilen Edge-Cloud-Computer ECC anzumelden, um eine interne Rechenleistung R1 an Fremdfahrzeuge 2 zur Verfügung zu stellen. Die Recheneinheit 13 kann dabei dazu ausgeführt sein, eine Antwort A2 zu formulieren, wenn Fremdfahrzeuge 2 eine Anfrage A1 im Sinne des erfindungsgemäßen Verfahrens an das Fahrzeug 1 schicken.

Wie es die Figur 2 andeutet und die Figur 3 veranschaulicht, kann das Steuergerät 10 eine Anzeigeeinheit 15, bspw. in Form eines Displays, vorzugsweise eines Touchdisplays, aufweisen, um ein Verfahren, welches wie oben beschrieben ablaufen kann, zumindest schrittweise zu visualisieren. Die Anzeigeeinheit 15 kann zudem dazu dienen, die oben erwähnte Karte K zu visualisieren, die das Straßennetzwerk 100, das mindestens eine Fremdfahrzeug 2, den mindestens einen Edge-Cloud-Computer ECC sowie mindestens eine Information über das mindestens eine Fremdfahrzeug 2 und den mindestens einen Edge-Cloud-Computer ECC abbildet.

In der Figur 2 ist es erkennbar, dass die Anzeigeeinheit 15 in einem Armaturenbrett des Fahrzeuges 1 angeordnet sein kann. Weiterhin ist es denkbar, dass die Anzeigeeinheit 15 in einem Overheaddisplay des Fahrzeuges 1 angeordnet sein kann.

Die Anzeigeeinheit 15 kann dem Benutzer des Fahrzeuges 1 helfen zu erkennen, wann das Fahrzeug 1 den Einzugsbereich des mindestens einen Edge-Cloud-Computers ECC verlässt und wann es zu Verbindungsproblemen kommen kann. Auf der Karte K können in Frage kommende Fremdfahrzeuge 2 abgebildet werden, die gemäß dem erfindungsgemäßen Verfahren angefragt werden können. Denkbar ist ferner, dass der Benutzer ein passendes Fremdfahrzeug 2 manuell auswählen oder bestätigen kann, bspw. durch Antippen, an wen die Anfrage A1 hinausgeschickt werden soll. Hierzu kann neben dem Fremdfahrzeug 2 ein Eingabefeld A1 vorgesehen sein. Neben dem Fremdfahrzeug 2 können weiterhin Informationen abgebildet werden, die für die Entscheidung relevant sein können, ob eine Anfrage an dieses Fremdfahrzeug 2 ausgesendet wird, wie Lage, Auslastung, Einzugsbereich, Rechenleistung, zeitliche Verfügbarkeit, verfügbare Rechenkapazität, Zuverlässigkeit, Wartezeit bei der Beanspruchung der Rechenleistung des Fremdfahrzeuges 2 sowie dessen Geschwindigkeit V und/oder voraussichtliche Route. Neben den Informationen können mithilfe der Anzeigeeinheit 15 die Anwendungen APP1, APP2, ..., APPN angezeigt werden, die mithilfe der internen Rechenleistung R1 und ggf. der externen Rechenleistung R2 des Fremdfahrzeuges 2 ausgeführt werden können, wenn das Fremdfahrzeug 2 eine positive Antwort A2 zurückschickt. Zudem kann die Anzeigeeinheit 12 dazu dienen, die Antwort A2 des Fremdfahrzeuges 2 zu visualisieren.

Die Kommunikationseinheit 12 im Rahmen der Erfindung kann außerdem dazu ausgeführt sein, mindestens eine Information über das Fahrzeug 1 an Fremdfahrzeuge 2 mitzuteilen. Diese Informationen können Anwendungsinformationen umfassen, wie z. B. die erforderliche Rechenleistung, die erforderliche Rechenkapazität, die Geschwindigkeit V sowie die Route des Fahrzeuges 1, die dazu dienen können, eine Antwort A2 auf die Anfrage A1 zu erstellen.

Die Kommunikationseinheit 12 kann eine Verbindung zu dem mindestens einen Fremdfahrzeug 2 über WLAN und/oder einen Mobilfunkstandard LTE, 5G aufbauen.

Ein Fahrzeug 1 mit mindestens einem entsprechenden Steuergerät 1 stellt einen weiteren Aspekt der vorliegenden Erfindung dar.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen des Anspruchs 1 zu verlassen.

### Bezugszeichenliste

- 1: Fahrzeug
- 2: Fremdfahrzeug

- 10: Steuergerät
- 11: Detektionseinheit
- 12: Kommunikationseinheit
- 13: Recheneinheit
- 14: Speichereinheit
- 15: Anzeigeeinheit

- 100: Straßennetzwerk

- A1: Anfrage
- A2: Antwort

- APP: Anwendung
- APP1: Fahrassistenzfunktionen
- APP1.1: Antiblockiersystem
- APP1.2: Elektronisches Stabilitätsprogramm
- APP1.3: Abstandsregeltempomat
- APP1.4: Notbremsassistent
- APP1.5: Spurhalteassistent
- APP1.6: Spurwechselassistent
- APP1.7: Nachtsichtassistent
- APP2: Fahrmodi
- APP3: Auswertung von Sensordaten
- APP4: Fusion von Sensordaten
- APP5: Berechnung von Fahrmanövern
- APP6: hochautomatisiertes und/oder autonomes Fahren
- APP7: Navigation
- APP8: Informationsdienste
- APP9: Entertainment
- APP10: Streaming
- APP11: Updates
- APP12: On-Board-Diagnostik
- APP13: Telematik
- APP14: Voice-Control
- APP15: Gestenerkennung
- APP16: Klimatisierung
- APP17: Positionserkennung

- ECC: Edge-Cloud-Computer
- CC: Cloud-Computer

- K: Karte

- Prio: Priorisierung

- R1: interne Rechenleistung
- R2: externe Rechenleistung

- V: Geschwindigkeit

## Patentansprüche

1. Verfahren zum Betreiben eines Fahrzeuges (1) auf einem Straßennetzwerk (100) beim Auslagern von Rechenleistung aus dem Fahrzeug (1) an mindestens einen Edge-Cloud-Computer (ECC), um bei Verbindungsunterbrechungen zu dem mindestens einen Edge-Cloud-Computer (ECC) unerwartete Abbrüche von ausführbaren Anwendungen (APP) zu vermeiden, umfassend folgenden Schritte:
1) Erfassen mindestens eines Fremdfahrzeuges (2) auf dem Straßennetzwerk (100),
2) Aussenden einer Anfrage (A1) an das mindestens eine Fremdfahrzeug (2), ob das Fremdfahrzeug (2) eine Rechenleistung (R2) bereitstellen kann, die als externe Rechenleistung (R2) für mindestens eine Anwendung (APP) des Fahrzeuges (1) genutzt werden kann,
**dadurch gekennzeichnet,**
**dass** mindestens einen weiteren Schritt aufweist.
3) Zuordnen der mindestens einen Anwendung (APP) des Fahrzeuges (1) zu der externen Rechenleistung (R2) in Abhängigkeit einer Antwort (A2) des Fremdfahrzeuges (2) auf die Anfrage (A1),
**dass** die mindestens eine Anwendung (APP) des Fahrzeuges (1) mehrere Anwendungen (APP) umfasst,
und **dass** die mehreren Anwendungen (APP) jeweils eine Priorisierung erhalten und in der Reihenfolge deren Priorisierung mithilfe einer internen Rechenleistung (R1) des Fahrzeuges (1) und/oder der externen Rechenleistung (R2) des mindestens einen Fremdfahrzeuges (2) ausgeführt werden.

2. Verfahren nach Anspruch 1,
**dadurch gekennzeichnet,**
**dass** wenn im Schritt 1) mehrere Fremdfahrzeuge (2) auf dem Straßennetzwerk (100) erfasst werden, zunächst die Fremdfahrzeuge (2) angefragt werden, die in einem Einzugsbereich des Fahrzeuges (1) liegen und/oder entlang einer Route des Fahrzeuges (1) voraussichtlich liegen werden.

3. Verfahren nach Anspruch 1 oder 2,
**dadurch gekennzeichnet,**
**dass** das mindestens eine Fremdfahrzeug (2) anhand mindestens einer der folgenden Informationen beurteilt wird:
- Lage,
- Auslastung,
- Einzugsbereich,
- Rechenleistung,
- zeitliche Verfügbarkeit,
- verfügbare Rechenkapazität,
- Zuverlässigkeit,
- Wartezeit,
- voraussichtliche Route,
- voraussichtliche Geschwindigkeit.

4. Verfahren nach Anspruch 1 oder 2,
**dadurch gekennzeichnet,**
**dass** für die externe Rechenleistung (R2), die vom Fremdfahrzeug (2) bereitgestellt wird, eine Charakterisierung an das Fremdfahrzeug (2) von dem Fahrzeug (1) und/oder einem Mobilfunkanbieter und/oder einem Netzwerkbetreiber erteilt wird.

5. Verfahren nach einem der vorhergehenden Ansprüche,
**dadurch gekennzeichnet,**
**dass** die mindestens eine Anwendung (APP) des Fahrzeuges (1) mindestens eine der folgenden Anwendungen (APP) umfasst:
| | |
|---|---|
| APP1 | Fahrassistenzfunktionen, |
| APP2 | Fahrmodi gemäß einem von möglichen Automatisierungsgraden beim Betreiben des Fahrzeuges (1), |
| APP3 | Auswertung von Sensordaten, |
| APP4 | Fusion von Sensordaten, |
| APP5 | Berechnung von Fahrmanövern, |
| APP6 | hochautomatisiertes und/oder autonomes Fahren, |
| APP7 | Navigation, |
| APP8 | Informationsdienste, |
| APP9 | Entertainment, |
| APP10 | Streaming, |
| APP11 | Updates, |
| APP12 | On-Board-Diagnostik, |
| APP13 | Telematik, |
| APP14 | Voice-Control, |
| APP15 | Gestenerkennung, |
| APP16 | Klimatisierung, |
| APP17 | Positionserkennung. |

6. Verfahren nach dem vorhergehenden Anspruch,
**dadurch gekennzeichnet,**
**dass** die Fahrassistenzfunktionen (APP1) mindestens eine der folgenden Anwendungen (APP) umfassen:
| | |
|---|---|
| APP1.1 | Antiblockiersystem (ABS), |
| APP1.2 | Elektronisches Stabilitätsprogramm (ESP), |
| APP1.3 | Abstandsregeltempomat (ACC), |
| APP1.4 | Notbremsassistent, |
| APP1.5 | Spurhalteassistent, |
| APP1.6 | Spurwechselassistent, |
| APP1.7 | Nachtsichtassistent. |

7. Verfahren nach Anspruch 5 oder 6,
**dadurch gekennzeichnet,**
**dass** die Anwendungen (APP) eine Priorisierung in der Reihenfolge von APP1 bis APP16 und/oder die Fahrassistenzfunktionen eine Priorisierung in der Reihenfolge von APP1.1 bis APP1.7 erhalten.

8. Verfahren nach einem der vorhergehenden Ansprüche,
**dadurch gekennzeichnet,**
**dass** die Verfahrensschritte 1) bis 3) prädiktiv und/oder zyklisch während des Normalbetriebs des Fahrzeuges (1) ausgeführt werden, bei dem ein Auslagern von Rechenleistung aus dem Fahrzeug (1) an mindestens einen Edge-Cloud-Computer (ECC) möglich ist,
und/oder dass die Verfahrensschritte 1) bis 3) im Falle einer Verbindungsunterbrechung zu dem mindestens einen Edge-Cloud-Computer (ECC) ausgeführt werden.

9. Verfahren nach einem der vorhergehenden Ansprüche,
**dadurch gekennzeichnet,**
**dass** im Falle einer Verbindungsunterbrechung zu dem mindestens einen Edge-Cloud-Computer (ECC) einem Benutzer des Fahrzeuges angeboten wird, die mindestens eine Anwendung (APP) des Fahrzeuges (1), die bei der Verbindungsunterbrechung wegfällt und die durch den Benutzer manuell ausgeführt werden kann, zu übernehmen.

10. Verfahren nach einem der vorhergehenden Ansprüche,
**dadurch gekennzeichnet,**
**dass** im Falle einer Verbindungsunterbrechung ein Notfall-Szenario ausgeführt wird, wenn eine Weiterfahrt mit dem Fahrzeug (1) nicht möglich ist,
und/oder dass das Notfall-Szenario mindestens eine der folgenden Maßnahmen umfasst:
- Reduzieren einer Geschwindigkeit des Fahrzeuges (1),
- Ausscheren,
- Halten,
- Signalisierung eines Notfalls.

11. Steuergerät (10) für ein Fahrzeug (1) zum Ausgleichen von Verbindungsunterbrechungen beim Auslagern von Rechenleistung aus dem Fahrzeug (1) an mindestens einen Edge-Cloud-Computer (ECC) während des Betriebes des Fahrzeuges (1) auf einem Straßennetzwerk (100),
aufweisend:
eine Detektionseinheit (11) zum Erfassen mindestens eines Fremdfahrzeuges (2) auf dem Straßennetzwerk (100),
eine Kommunikationseinheit (12) zum Aussenden einer Anfrage (A1) an das mindestens eine Fremdfahrzeug (2), ob das Fremdfahrzeug (2) eine Rechenleistung (R2) bereitstellen kann, die als externe Rechenleistung (R2) für mindestens eine Anwendung (APP) des Fahrzeuges (1) genutzt werden kann,
eine Recheneinheit (13) zum Zuordnen der mindestens einen Anwendung (APP) des Fahrzeuges (1) zu der externen Rechenleistung (R2) in Abhängigkeit einer Antwort (A2) des Fremdfahrzeuges (2) auf die Anfrage (A1),
**dadurch gekennzeichnet,**
**dass** das Steuergerät (10) dazu ausgeführt ist, ein Verfahren nach einem der vorhergehenden Ansprüche 1 bis 11 auszuführen.

12. Steuergerät (10) nach dem vorhergehenden Anspruch,
**dadurch gekennzeichnet,**
**dass** das Steuergerät (10) in einer zentralen Steuereinheit des Fahrzeuges (1) implementierbar oder als eine eigenständige Steuereinheit (10) ausgebildet ist.

13. Steuergerät (10) nach einem der vorhergehenden Ansprüche 11 oder 12,
**dadurch gekennzeichnet,**
**dass** eine Speichereinheit (14) vorgesehen ist, in der eine dynamische Karte (K) hinterlegt ist, die das Straßennetzwerk (100), das mindestens eine Fremdfahrzeug (2), den mindestens einen Edge-Cloud-Computer (ECC) und/oder mindestens eine Information über das mindestens eine Fremdfahrzeug (2) und den mindestens einen Edge-Cloud-Computer (ECC) abbildet.

14. Steuergerät (10) nach dem vorhergehenden Anspruch,
**dadurch gekennzeichnet,**
**dass** die Recheneinheit (13) dazu ausgeführt ist, die Karte (K) prädiktiv und/oder zyklisch während des Normalbetriebs des Fahrzeuges (1) zu aktualisieren, bei dem ein Auslagern von Rechenleistung aus dem Fahrzeug (1) an mindestens einen Edge-Cloud-Computer (ECC) möglich ist.

15. Steuergerät (10) nach einem der vorhergehenden Ansprüche,
**dadurch gekennzeichnet,**
**dass** die Recheneinheit (13) dazu ausgeführt ist, das Fahrzeug (1) als einen mobilen Edge-Cloud-Computer (ECC) anzumelden, um eine interne Rechenleistung (R1) an Fremdfahrzeuge (2) zur Verfügung zu stellen,
und/oder eine Anzeigeeinheit (15) vorgesehen ist, um eine dynamische Karte (K) zu visualisieren, die das Straßennetzwerk (100), das mindestens eine Fremdfahrzeug (2), den mindestens einen Edge-Cloud-Computer (ECC) und/oder mindestens eine Information über das mindestens eine Fremdfahrzeug (2) und den mindestens einen Edge-Cloud-Computer (ECC) abbildet.

16. Steuergerät (10) nach einem der vorhergehenden Ansprüche,
**dadurch gekennzeichnet,**
**dass** die Kommunikationseinheit (12) dazu ausgeführt ist, mindestens eine Information über das Fahrzeug (1) an Fremdfahrzeuge (2) mitzuteilen,
und/oder dass die Kommunikationseinheit (12) dazu ausgeführt ist, eine Verbindung zu dem mindestens einem Fremdfahrzeug (2) über WLAN und/oder einen Mobilfunktstandard (LTE, 5G) aufzubauen.

17. Fahrzeug (1) mit mindestens einem Steuergerät (10) nach einem der vorhergehenden Ansprüche 11 bis 16.

## Claims

1. Method for operating a vehicle (1) on a road network (100) when transferring computing power from the vehicle (1) to at least one edge cloud computer (ECC) in order to prevent sudden crashes of executable applications (APP) when connection to the at least one edge cloud computer (ECC) is interrupted,
comprising the following steps:
1) detecting at least one foreign vehicle (2) on the road network (100),
2) emitting a request (A1) to the at least one foreign vehicle (2) as to whether the foreign vehicle (2) can provide computing power (R2) that can be used as external computing power (R2) for at least one application (APP) of the vehicle (1),
**characterized in that**
has at least one further step.
3) assigning the at least one application (APP) of the vehicle (1) to the external computing power (R2) on the basis of a response (A2) from the foreign vehicle (2) to the request (A1),
**in that** the at least one application (APP) of the vehicle (1) comprises a plurality of applications (APP),
and **in that** the plurality of applications (APP) each receive a prioritization and are executed in the order of their prioritization with the aid of internal computing power (R1) of the vehicle (1) and/or the external computing power (R2) of the at least one foreign vehicle (2).

2. Method according to claim 1,
**characterized in that**
if a plurality of foreign vehicles (2) are detected on the road network (100) in step 1), the foreign vehicles (2) which are in a catchment area of the vehicle (1) and/or are expected to be along a route of the vehicle (1) are sent a request first.

3. Method according to either claim 1 or claim 2,
**characterized in that**
the at least one foreign vehicle (2) is assessed on the basis of at least one of the following pieces of information:
- position,
- capacity,
- catchment area,
- computing power,
- available time,
- available computing capacity,
- reliability,
- waiting time,
- expected route,
- expected speed.

4. Method according to either claim 1 or claim 2,
**characterized in that**
for the external computing power (R2) provided by the foreign vehicle (2), a characterization is issued to the foreign vehicle (2) by the vehicle (1) and/or a mobile communication provider and/or a network operator.

5. Method according to any of the preceding claims,
**characterized in that**
the at least one application (APP) of the vehicle (1) comprises at least one of the following applications (APP):
| | |
|---|---|
| APP1 | driver assistance functions, |
| APP2 | driving modes according to any of the possible degrees of automation during operation of the vehicle (1), |
| APP3 | evaluation of sensor data, |
| APP4 | fusion of sensor data, |
| APP5 | calculation of driving maneuvers, |
| APP6 | highly automated and/or autonomous driving, |
| APP7 | navigation, |
| APP8 | information services, |
| APP9 | entertainment, |
| APP10 | streaming, |
| APP11 | updates, |
| APP12 | on-board diagnostics, |
| APP13 | telematics, |
| APP14 | voice control, |
| APP15 | gesture recognition, |
| APP16 | air conditioning, |
| APP17 | position detection. |

6. Method according to the preceding claim, **characterized in that**
the driver assistance functions (APP1) comprise at least one of the following applications (APP):
| | |
|---|---|
| APP1.1 | anti-lock braking system (ABS), |
| APP1.2 | electronic stability program (ESP), |
| APP1.3 | adaptive cruise control (ACC), |
| APP1.4 | emergency braking assistant, |
| APP1.5 | lane keeping assistant, |
| APP1.6 | lane change assistant, |
| APP1.7 | night vision assistant. |

7. Method according to either claim 5 or claim 6,
**characterized in that**
the applications (APP) receive a prioritization in the order of APP1 to APP16 and/or the driver assistance functions receive a prioritization in the order of APP1.1 to APP1.7.

8. Method according to any of the preceding claims,
**characterized in that**
method steps 1) to 3) are carried out predictively and/or cyclically during normal operation of the vehicle (1), during which a transfer of computing power from the vehicle (1) to at least one edge cloud computer (ECC) is possible,
and/or **in that** method steps 1) to 3) are carried out in the event of a connection to the at least one edge cloud computer (ECC) being interrupted.

9. Method according to any of the preceding claims,
**characterized in that**
in the event of a connection to the at least one edge cloud computer (ECC) being interrupted, a user of the vehicle is offered the opportunity to take over the at least one application (APP) of the vehicle (1), which becomes defunct during the connection interruption and which can be executed manually by the user.

10. Method according to any of the preceding claims,
**characterized in that**
in the event of a connection interruption, an emergency scenario is executed if a continuation with the vehicle (1) is not possible,
and/or **in that** the emergency scenario comprises at least one of the following measures:
- reducing a speed of the vehicle (1),
- pulling over,
- stopping,
- signaling an emergency.

11. Control device (10) for a vehicle (1) for compensating for connection interruptions during the transfer of computing power from the vehicle (1) to at least one edge cloud computer (ECC) during the operation of the vehicle (1) on a road network (100),
comprising:
a detection unit (11) for detecting at least one foreign vehicle (2) on the road network (100),
a communication unit (12) for emitting a request (A1) to the at least one foreign vehicle (2) as to whether the foreign vehicle (2) can provide computing power (R2) which can be used as external computing power (R2) for at least one application (APP) of the vehicle (1),
a computing unit (13) for assigning the at least one application (APP) of the vehicle (1) to the external computing power (R2) on the basis of a response (A2) from the foreign vehicle (2) to the request (A1),
**characterized in that**
the control device (10) is designed to carry out a method according to any of the preceding claims 1 to 11.

12. Control device (10) according to the preceding claim,
**characterized in that**
the control device (10) can be implemented in a central control unit of the vehicle (1) or is designed as a standalone control unit (10).

13. Control device (10) according to either of the preceding claims 11 or 12,
**characterized in that**
a memory unit (14) is provided in which a dynamic map (K) is stored, which depicts the road network (100), the at least one foreign vehicle (2), the at least one edge cloud computer (ECC) and/or at least one piece of information about the at least one foreign vehicle (2) and the at least one edge cloud computer (ECC).

14. Control device (10) according to the preceding claim,
**characterized in that**
the computing unit (13) is designed to update the map (K) predictively and/or cyclically during normal operation of the vehicle (1), during which the transfer of computing power from the vehicle (1) to at least one edge cloud computer (ECC) is possible.

15. Control device (10) according to any of the preceding claims,
**characterized in that**
the computing unit (13) is designed to register the vehicle (1) as a mobile edge cloud computer (ECC) in order to provide internal computing power (R1) to foreign vehicles (2),
and/or a display unit (15) is provided in order to visualize a dynamic map (K) which depicts the road network (100), the at least one foreign vehicle (2), the at least one edge cloud computer (ECC), and/or at least one piece of information about the at least one foreign vehicle (2) and the at least one edge cloud computer (ECC).

16. Control device (10) according to any of the preceding claims,
**characterized in that**
the communication unit (12) is designed to disclose at least one piece of information about the vehicle (1) to foreign vehicles (2), and/or **in that** the communication unit (12) is designed to establish a connection to the at least one foreign vehicle (2) via WLAN and/or a mobile communication standard (LTE, 5G).

17. Vehicle (1) having at least one control device (10) according to any of the preceding claims 11 to 16.

## Revendications

1. Procédé pour faire fonctionner un véhicule (1) sur un réseau routier (100) lors du transfert de la puissance de calcul depuis le véhicule (1) à au moins un ordinateur en nuage de périphérie (Edge-Cloud-Computer ECC), afin d'éviter, lors d'interruptions de connexion, les arrêts inattendus des applications exécutables (APP) sur l'au moins un ordinateur en nuage de périphérique (ECC),
comprenant les étapes suivantes :
1) détection d'au moins un véhicule tiers (2) sur le réseau routier (100),
2) envoi d'une requête (A1) à l'au moins un véhicule tiers (2), pour savoir si le véhicule tiers (2) peut fournir une puissance de calcul (R2), qui peut être utilisée en tant que puissance de calcul externe (R2) pour au moins une application (APP) du véhicule (1),
**caractérisé en ce**
**qu**'il présente au moins une autre étape.
3) affectation de l'au moins une application (APP) du véhicule (1) à la puissance de calcul externe (R2) en fonction d'une réponse (A2) du véhicule tiers (2) à la requête (A1),
que l'au moins une application (APP) du véhicule (1) comprend plusieurs applications (APP),
et que les plusieurs applications (APP) reçoivent respectivement une hiérarchisation et sont exécutées dans l'ordre de leur hiérarchisation à l'aide d'une puissance de calcul interne (R1) du véhicule (1) et/ou de la puissance de calcul externe (R2) de l'au moins un véhicule tiers (2).

2. Procédé selon la revendication 1,
**caractérisé en ce**
**que** lorsque dans l'étape 1) plusieurs véhicules tiers (2) sont détectés sur le réseau routier (100), les véhicules tiers (2) qui se trouvent dans une zone de desserte du véhicule (1) et/ou qui sont susceptibles de se trouver le long d'un itinéraire du véhicule (1) sont interrogés d'abord.

3. Procédé selon la revendication 1 ou 2,
**caractérisé en ce**
**que** l'au moins un véhicule tiers (2) est évalué sur la base d'au moins une des informations suivantes :
- position,
- taux d'occupation,
- zone de desserte,
- puissance de calcul,
- disponibilité temporelle,
- capacité de calcul disponible,
- fiabilité,
- temps d'attente,
- itinéraire prévu,
- vitesse prévue.

4. Procédé selon la revendication 1 ou 2,
**caractérisé en ce**
**que** pour la puissance de calcul externe (R2), qui est fournie par le véhicule tiers (2), une caractérisation est accordée au véhicule tiers (2) par le véhicule (1) et/ou un opérateur de téléphonie mobile et/ou un opérateur de réseau.

5. Procédé selon l'une quelconque des revendications précédentes,
**caractérisé en ce**
**que** l'au moins une application (APP) du véhicule (1) comprend au moins l'une des applications suivantes (APP) :
| | |
|---|---|
| APP1 | fonctions d'aide à la conduite, |
| APP2 | modes de conduite selon l'un des degrés d'automatisation possibles lors du fonctionnement du véhicule (1), |
| APP3 | évaluation de données de capteur, |
| APP4 | fusion de données de capteur, |
| APP5 | calcul de manoeuvres de conduite, |
| APP6 | conduite hautement automatisée et/ou autonome, |
| APP7 | navigation, |
| APP8 | services d'information, |
| APP9 | divertissement, |
| APP10 | diffusion en continu, |
| APP11 | mises à jour, |
| APP12 | diagnostic embarqué, |
| APP13 | télématique, |
| APP14 | commande vocale, |
| APP15 | reconnaissance des gestes, |
| APP16 | climatisation, |
| APP17 | reconnaissance de la position. |

6. Procédé selon la revendication précédente,
**caractérisé en ce**
**que** les fonctions d'aide à la conduite (APP1) comprennent au moins l'une des applications suivantes (APP) :
| | |
|---|---|
| APP1.1 | système de freinage antiblocage (ABS), |
| APP1.2 | programme électronique de stabilité (ESP), |
| APP1.3 | régulateur de vitesse et de distance (ACC), |
| APP1.4 | assistance au freinage d'urgence, |
| APP1.5 | assistance au maintien dans la voie, |
| APP1.6 | assistance au changement de voie, |
| APP1.7 | assistance de vision nocturne. |

7. Procédé selon la revendication 5 ou 6,
**caractérisé en ce**
**que** les applications (APP) reçoivent une hiérarchisation dans l'ordre de APP1 à APP16 et/ou les fonctions d'aide à la conduite reçoivent une hiérarchisation dans l'ordre de APP1.1 à APP1.7.

8. Procédé selon l'une quelconque des revendications précédentes,
**caractérisé en ce**
**que** les étapes de procédé 1) à 3) sont réalisées de manière prédictive et/ou cyclique pendant le fonctionnement normal du véhicule (1), dans lequel un transfert de la puissance de calcul depuis le véhicule (1) à au moins un ordinateur en nuage de périphérie (ECC) est possible,
et/ou que les étapes de procédé 1) à 3) sont réalisées dans le cas d'une interruption de connexion à l'au moins un ordinateur en nuage de périphérie (ECC).

9. Procédé selon l'une quelconque des revendications précédentes,
**caractérisé en ce**
**que** dans le cas d'une interruption de connexion à l'au moins un ordinateur en nuage de périphérie (ECC), un utilisateur du véhicule est invité à reprendre en charge l'au moins une application (APP) du véhicule (1), qui n'est plus disponible lors de l'interruption de connexion et qui peut être exécutée manuellement par l'utilisateur.

10. Procédé selon l'une quelconque des revendications précédentes,
**caractérisé en ce**
**que** dans le cas d'une interruption de connexion, un scénario d'urgence est exécuté, lorsqu'une poursuite du voyage avec le véhicule (1) n'est plus possible,
et/ou que le scénario d'urgence comprend au moins l'une des mesures suivantes :
- réduction d'une vitesse du véhicule (1),
- déboîtement,
- arrêt,
- signalisation d'une urgence.

11. Appareil de commande (10) pour un véhicule (1) pour la compensation d'interruptions de connexion lors du transfert de la puissance de calcul à partir du véhicule (1) à au moins un ordinateur en nuage de périphérie (ECC) pendant le fonctionnement du véhicule (1) sur un réseau routier (100),
présentant :
une unité de détection (11) pour la détection d'au moins un véhicule tiers (2) sur le réseau routier (100),
une unité de communication (12) pour l'envoi d'une requête (A1) à l'au moins un véhicule tiers (2), pour savoir si le véhicule tiers (2) peut fournir une puissance de calcul (R2), qui peut être utilisée en tant que puissance de calcul externe (R2) pour au moins une application (APP) du véhicule (1),
une unité de calcul (13) pour l'affectation de l'au moins une application (APP) du véhicule (1) à la puissance de calcul externe (R2) en fonction d'une réponse (A2) du véhicule tiers (2) à la requête (A1),
**caractérisé en ce**
**que** l'appareil de commande (10) est conçu pour réaliser un procédé selon l'une des revendications précédentes 1 à 11.

12. Appareil de commande (10) selon la revendication précédente,
**caractérisé en ce**
**que** l'appareil de commande (10) peut être implémenté dans une unité de commande centrale du véhicule (1) ou est formé comme une unité de commande indépendante (10).

13. Appareil de commande (10) selon l'une des revendications précédentes 11 ou 12,
**caractérisé en ce**
**qu**'une unité de mémoire (14) est prévue, dans laquelle une carte dynamique (K) est mémorisée, qui illustre le réseau routier (100), l'au moins un véhicule tiers (2), l'au moins un ordinateur en nuage de périphérie (ECC) et/ou l'au moins une information sur l'au moins un véhicule tiers (2) et l'au moins un ordinateur en nuage de périphérie (ECC).

14. Appareil de commande (10) selon la revendication précédente,
**caractérisé en ce**
**que** l'unité de calcul (13) est conçue pour actualiser la carte (K) de manière prédictive et/ou cyclique pendant le fonctionnement normal du véhicule (1), dans lequel un transfert de la puissance de calcul depuis le véhicule (1) à au moins un ordinateur en nuage de périphérie (ECC) est possible.

15. Appareil de commande (10) selon l'une des revendications précédentes,
**caractérisé en ce**
**que** l'unité de calcul (13) est conçue pour inscrire le véhicule (1) comme ordinateur en nuage de périphérie (ECC), afin de mettre à disposition une puissance de calcul interne (R1) aux véhicules tiers (2),
et/ou une unité d'affichage (15) est prévue, afin de visualiser une carte dynamique (K), qui illustre le réseau routier (100), l'au moins un véhicule tiers (2), l'au moins un ordinateur en nuage de périphérie (ECC) et/ou l'au moins une information sur l'au moins un véhicule tiers (2) et l'au moins un ordinateur en nuage de périphérie (ECC).

16. Appareil de commande (10) selon l'une des revendications précédentes,
**caractérisé en ce**
**que** l'unité de communication (12) est conçue pour partager au moins une information sur le véhicule (1) aux véhicules tiers (2) et/ou que l'unité de communication (12) est conçue pour établir une connexion avec l'au moins un véhicule tiers (2) par l'intermédiaire d'un WLAN et/ou d'une norme de téléphonie mobile (LTE, 5G).

17. Véhicule (1) comprenant au moins un appareil de commande (10) selon l'une des revendications précédentes 11 à 16.
